Europäisches Patentamt

European Patent Office

Office européen des brevets

(19)

(11) **EP 1 106 460 A2**

(12) **EUROPEAN PATENT APPLICATION**

(43) Date of publication:
**13.06.2001 Bulletin 2001/24**

(51) Int Cl.⁷: **B60T 8/00**

(21) Application number: **00124009.2**

(22) Date of filing: **04.11.2000**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.12.1999 GB 9928767**

(71) Applicant: **Rover Group Limited
Warwick CV34 6RG (GB)**

(72) Inventor: **Faithfull, Paul Thomas
Warwickshire CV9 2QR (GB)**

(74) Representative: **Zollner, Richard et al
Bayerische Motoren Werke AG
Patentabteilung AJ-3
80788 München (DE)**

(54) **A control method**

(57)     A method is disclosed which is suitable for providing a signal indicative of a wheel speed for a control system of a vehicle, the method including the step of estimating the speed of a wheel of a vehicle as a function of the torque applied thereto and an estimated resistive torque.

**Figure 2**

EP 1 106 460 A2

**Description**

This invention relates to control methods and in particular, but not exclusively, to a control method for deriving the wheel speed of a vehicle.

Some known wheel speed measurement devices for vehicles employ a pick-up transducer and target wheel arrangement. A significant lag can sometimes be introduced into the feedback signal, e.g. if a low number of targets is used with a consequent high level of signal smoothing.

It is an object of this invention to provide an improved control method.

Accordingly, the invention provides a control method suitable for providing a signal indicative of a wheel speed for a control system of a vehicle, the method including the step of estimating the speed of a wheel as a function of the torque applied thereto and an estimated resistive torque.

The method may include applying a lag to the estimated wheel speed and deriving the difference between the lagging estimated speed and a measured wheel speed, so as to produce a function which is indicative of the difference between the actual resistive torque and the estimated torque.

The method may include applying a proportional gain so as to estimate the resistive torque as a function of an error signal.

The invention also provides a vehicle including a control system arranged to operate according to the method of the invention. Said control system may comprise a terrain recognition system or a flat tyre warning system.

The invention will now be described by way of example only and with reference to the accompanying drawings, in which:

Figure 1 is a block diagram which represents a known control method; and

Figure 2 is a block diagram which represents a control method according to the invention.

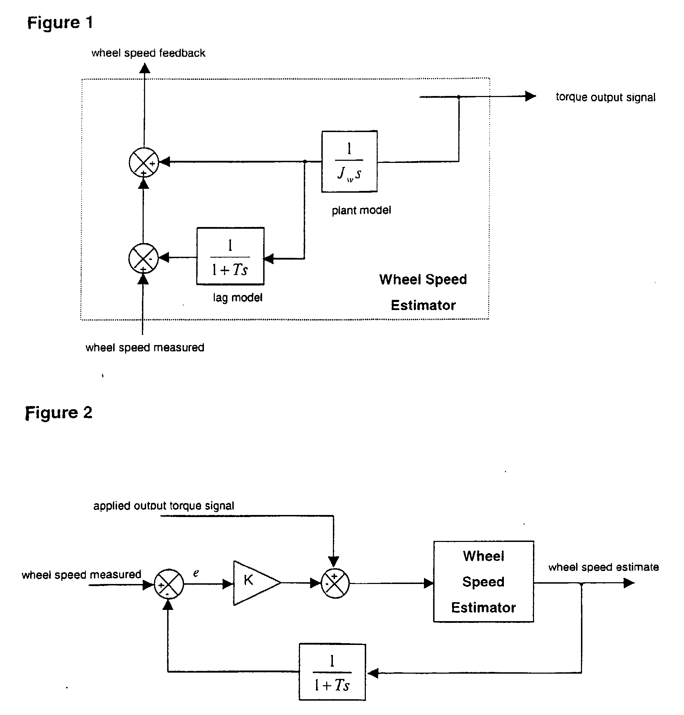

Referring to the figures, one method of dealing with a feedback signal delay is to employ a "Smith Predictor" arrangement. Such an arrangement is shown in Figure 1 and is discussed in *"The Art of Control Engineering"; Dutton, K et al.; Addison Wesley, 1997.* This arrangement is based on a predictive model of a plant's behaviour for a known input. The arrangement can be adapted to negate the effects of a feedback lag by modelling the behaviour of an ideal plant and predicting the feedback signal through the application of a lag.

For vehicles, this approach is suitable for wheel speed measurement where a lag can occur in the signal feedback. A wheel can be considered as a simple inertia and, when a known torque is applied to the wheel, then wheel acceleration $\dot{\omega}$ can be modelled using equation (1) below. From this, wheel speed can be obtained by integration.

$$\dot{\omega} = \left(\frac{1}{J_w}\right)\left[\tau_{app} - \tau_{res}\right] \qquad (1)$$

$J_w$ is the wheel inertia; $\tau_{app}$ is the applied torque from the drive train; and $\tau_{res}$ is the resistive torque acting on the wheel.

The resistive torque $\tau_{res}$ acting on the wheel is a function of the load on the wheel and the terrain. A direct measurement of this torque is difficult using current methods in the automotive art and the method of the present invention provides a method of inferring the resistive torque $\tau_{res}$ acting on the wheel by using the measured wheel speed $\omega_m$ and an estimated wheel speed $\omega_{est}$. The method of the present invention is explained now with particular reference to Figure 2.

The measured wheel speed $\omega_m$ can be represented by equation (2), shown below.

$$\omega m = \left[\frac{1}{1+T_s}\right]\left(\frac{1}{J_w S}\right)\left[\tau_{app} - \tau_{res}\right] \quad (2)$$

T represents the time constant associated with a measurement time lag denoted by $(1/1+T_s)$

An estimated wheel speed $\omega_{est}$ is calculated as a function of $\tau_{app}$ (known) and an estimated resistive torque $\tau_{res\_est}$ using equation (3).

$$\omega_{est} = \left(\frac{1}{J_w S}\right)\left[\tau_{app} - \tau_{res\_est}\right] \quad (3)$$

The difference between the estimated torque with an applied lag and the measured speed produces an error which represents the difference between the estimated and the actual resistive torques, as shown in equation (4).

$$\omega m - \omega_{est}\left(\frac{1}{1+T_s}\right) = \left(\frac{1}{1+T_s}\right)\left(\frac{1}{J_w S}\right)\left[\tau_{res\_est} - \tau_{res}\right] = e \quad (4)$$

It is desirable to reduce the difference between the estimated and the actual resistive torque towards zero, i. e. so that $\omega_{est} \rightarrow \omega_{true}$ . In the embodiment of the invention shown in Figure 2, a proportional gain K is used to estimate the resistive function K$e$ of the error ($e$), where K$e$ = $\tau_{res\_est}$.

In modifications to the invention, however, the resistive torque estimation can use a "Proportional + Integral" (PI) or "Proportional, Integral & Derivative" (PID) gain as appropriate.

The wheel load estimate can be used as part of a terrain recognition system of, for example, an off-road vehicle. It could also be adapted for providing a vehicle user with a warning of low tyre pressure.

**Claims**

1. A control method suitable for providing a signal indicative of a wheel speed for a control system of a vehicle, the method including the step of estimating the speed of a wheel as a function of the torque applied thereto and an estimated resistive torque.

2. A method according to Claim 1, including applying a lag to the estimated wheel speed and deriving the difference between the lagging estimated speed and a measured wheel speed, so as to produce a function which is indicative of the difference between the actual resistive torque and the estimated torque.

3. A method according to Claim 2, including applying a proportional gain so as to estimate the resistive torque as a function of an error signal.

4. A method substantially as described herein and with reference to Figure 2 of the accompanying drawings.

5. A vehicle including a control system arranged to operate according to the method of any preceding claim.

**6.** A vehicle according to Claim 5, said control system comprising a terrain recognition system or a flat tyre warning system.

**Figure 1**

wheel speed feedback

torque output signal

$$\frac{1}{J_w s}$$

plant model

$$\frac{1}{1+Ts}$$

lag model

**Wheel Speed**

**Estimator**

wheel speed measured

**Figure 2**

applied output torque signal

wheel speed measured

$e$

K

**Wheel Speed Estimator**

wheel speed estimate

$$\frac{1}{1+Ts}$$